# EUROPÄISCHE PATENTANMELDUNG

(11) **EP 0 534 897 A1**
(43) Veröffentlichungstag der Anmeldung: **31.03.1993**
(21) Anmeldenummer: 92810639.2
(22) Anmeldetag: 21.08.1992
(51) Int. Cl.: G05B 19/417

(54) **Kommunikation zwischen einem Bedienungsautomat und einer Textilmaschine**

(30) Priorität: 24.09.1991 CH 2830/91
(71) Anmelder: MASCHINENFABRIK RIETER AG, CH-8406 Winterthur (CH)
(72) Erfinder: Citterio, Giorgio, CH-8320 Fehraltorf (CH); Hartmeier, Werner, CH-8307 Effretikon (CH)
(74) Vertreter: Bergmeier, Werner

(57) **Zusammenfassung**

Ein Verfahren zur Uebertragung von Daten zwischen einem Bedienungsgerät und einer Textilmaschine, dadurch gekennzeichnet, dass nachdem festgestellt wird, dass das Gerät und die Maschine in einer vorbestimmten Beziehung zueinander stehen, ein Startsignal für die Kommunikation entweder vom Gerät oder von der Maschine ausgelöst wird.

## Beschreibung

Die Erfindung bezieht sich auf ein Verfahren und auf Einrichtungen zur Datenübertragung zwischen einem fahrbaren Bedienungsautomat z.B. einem Bedienungsroboter und einer Textilmaschine. Die Erfindung ist insbesondere zur Anwendung geeignet, wo die Textilmaschine (z.B. eine Ringspinnmaschine) derart kommerziell unter Kostendruck steht, dass von aufwendiger, hochgezüchteter Steuerungselektronik abgesehen werden muss. Diese Erfindung unterscheidet sich daher von einem Kommunikationssystem nach unserer EP-Patentanmeldung Nr. 295 406, wo die einzelnen Spinnstellen einer Rotorspinnmaschine je mit einer autonom arbeitenden Steuerungsvorrichtung versehen werden können. Die Erfindung ist aber bestens zur Anwendung in Kombination mit einer Ringspinnmaschine und einem Roboter nach unserer europäischen Patentanmeldung Nr. 394 671 geeignet, wo die Kommunikation zwischen dem Roboter und der Maschine an einer vorbestimmten Stelle (z.B. einer Parkstelle für den Roboter) stattfinden kann.

### Die Erfindung

Ein Verfahren nach dieser Erfindung zur Datenübertragung zwischen einem fahrbaren Bedienungsgerät und einer Textilmaschine wird durch die folgenden Schritte gekennzeichnet:
1. das sich Gegenüberstehen der Maschine und des Gerätes in einer vorbestimmten Beziehung wird entweder von der Maschine, oder vom Gerät (oder allenfalls von beiden) festgestellt,
2. entweder die Maschine oder das Gerät sendet ein Startsignal,
3. das Gerät sendet die von ihm an die Maschine zu übertragenden Daten, und
4. die Maschine sendet anschliessend einen Befehl an das Gerät.

Das Startsignal wird vorzugsweise vom Gerät an die Maschine gesendet.

Ein Bedienungsgerät nach dieser Erfindung ist mit Mittel zum Feststellen einer vorbestimmten Beziehung zu einer Textilmaschine ausgerüstet und ist dadurch gekennzeichnet, dass Mittel zum Senden eines Kommunikationsstartsignals vorgesehen sind und derart durch die Steuerung des Gerätes mit dem erstgenannten Mittel in Verbindung stehen, dass das Startsignal nach dem Feststellen der Beziehung ausgelöst wird.

Die vorbestimmte Beziehung kann z.B. das Stillstehen des fahrbaren Gerätes an einer vorgegebenen Stelle (Parkstelle) an der Maschine sein, wie dies in EP 394 671 ausführlich erklärt wurde.

Die Datenübertragung kann mittels Lichtsender/-empfänger erfolgen, könnte aber auch durch eine andere Signalübertragungsvorrichtung erfolgen z.B. durch eine magnetische Verbindung zwischen dem Gerät und der Maschine oder sogar über eine Leitung.

Es kann zusätzlich ein Mittel vorgesehen werden, das eine stetige Signalübertragungsverbindung zwischen dem Gerät und der Maschine darstellt, das aber nur zur Uebertragung von einfachen Befehlen geeignet ist. Eine solche Signalübertragung kann z.B. über eine Stromschiene erfolgen, die zur Belieferung des Gerätes mit Energie während seiner Fahrt vorgesehen ist. Die Anordnung kann derart getroffen werden, dass über diese stetige Verbindung einen einzigen Befehl (z.B."Notstopp") gesendet werden kann.

Die Datenübertragung erfolgt vorzugsweise durch Uebertragung von pulsförmigen Signalen (digitale Signalübertragung), wobei die zu übertragenden Informationen vorzugsweise nach einem vorbestimmten Schema verschlüsselt sind. Das Schema ermöglicht aber vorzugsweise die Uebertragung nach einem Standard-Uebertragungs-Code z.B. ASCII-Code. Es können z.B. Zeichen bzw. "Buchstaben" nach diesem Code ausgetauscht werden, die je einer vorbestimmten Bedeutung nach dem Schema zugeordnet sind.

Die Ringspinnmaschine/Roboter-Kombination.
Im Interesse einer vollständigen Beschreibung in dieser Anmeldung werden nachfolgend gewisse Aspekte einer Anlage nach EP 394 671 hier wiederholt. Der Bedienroboter muss für bestimmte Betriebszustände der Maschine eine festgelegte Position einnehmen, insbesondere eine Parkposition am Kopf oder Fuss der Maschine während eines Doffvorganges besetzen, da der Roboter sonst mit Maschinenteilen (dem Dofferbalken) kollidieren könnte.

Um die gegenseitige Verriegelung der Funktionen "Fahren des Bedienungsroboters" und "Doffen der Maschine" zu gewährleisten, ist es erwünscht, die Besetzung einer bestimmten Position (oder allenfalls einer aus einer vorbestimmten Mehrzahl von Positionen) durch den Roboter zu überwachen. Die kann durch das Vorsehen eines Kommunikationsvorgangs mit dem Roboter in dieser Position gewährleistet werden.

Der Einsatz des Roboters wird von der Maschine aus gesteuert, indem sich der Roboter erst nach einer "Freigabe" von der Maschinensteuerung die vorbestimmte Position verlassen darf, und allenfalls nach einem von der Maschinensteuerung bestimmten Arbeitszyklus sich an dieser Stelle (oder an einer anderen bestimmten Stelle) wieder befinden muss, auch dann, wenn der Roboter in der ihm vorgegebenen Arbeitszeit seine gesamte Arbeitsbelastung nicht erledigen kann. Wenn der Roboter auf der Maschine aufgestellt wird, muss er sich daher sofort in die Kommunikationsstelle begeben, bzw. verschoben werden. In der nachfolgenden Beschreibung können die Ausdrücke "Kommunikationsposition", "Startposition" und "Parkposition" als gleichbedeutend angenommen werden, da nur eine einzige solche Position bestimmt wird, die für alle dieser Funktionen dient. Dies ist natürlich nicht zwingend notwendig.

Ein möglicher Ablauf sieht dementsprechend folgenderweise aus:
- Der Bedienungsroboter wird zum Start in die Startposition gleich Kommunikations-Position geschoben,
- Hier findet eine erste gegenseitige Kommunikation zwischen Maschine und Bedienungsroboter statt,
- Die Steuerung der Maschine entscheidet nun, ob sie aufgrund des Betriebszustandes der Maschine den Bedienungsroboter für seine Arbeit freigeben kann oder in der Startposition zurück behalten muss,
- Sofern die verbleibende Zeit bis zum nächsten Doffvorgang dies gestattet, gibt die Maschine den Bedienungsroboter zum Einsatz frei. Diese Freigabe kann verknüpft sein mit einer Maximaldauer für den Einsatz,
- Der Bedienungsroboter verlässt die Startposition erst nach erfolgter Freigabe und kehrt innerhalb der vorgegebenen Maximaldauer wieder an die Startposition zurück, sofern er nicht durch eine Störung auf seiner Runde blockiert wird,
- Die Steuerung der Maschine überwacht im zeitlichen Ablauf die Rückmeldung des Bedienungsroboters an der Startposition. Im normalen Betrieb erfolgt hierauf die nächste Freigabe auf die bereits dargelegte Weise. Beim Ueberschreiten der Maximalzeit in Folge einer Störung des Bedienungsroboters interpretiert die Maschinensteuerung die fehlende Rückmeldung als Störung und veranlasst einen Alarm. Gleichzeitig sind die Maschinenfunktionen gesperrt, welche den Aufenthalt des Bedienungsroboters an der Startposition erfordern,

Rückruf bzw. Notstopp:
Der Bedienungsroboter ist vorzugsweise dazu eingerichtet, (z.B. mittels einer Reservebatterie als Stromquelle) bei Ausbleiben der Versorgungsspannung auf der Speiseschiene automatisch seine Funktionen abzubrechen und an die Startposition zurückzukehren. Diese Eigenschaft kann von der Maschinensteuerung benützt werden, um durch Ausschalten der Spannungsversorgung den Bedienungsroboter zu beliebiger Zeit zurückzurufen. Es handelt sich aber hier um eine redundante Sicherheitsfunktion, die im normalen Betrieb nicht eingesetzt wird.

Als Beispiel wird nun eine Ausführung eines Systems nach der Erfindung anhand der Zeichnungen beschrieben werden, wobei von einer Roboter/Ringspinnmaschinen-Anlage nach den Figuren 1 und 2 bzw. 2 und 3 der EP 394 671 ausgegangen wird.
Es zeigt:
Fig. 1 eine schematische Darstellung einer Ringspinnmaschine mit einem Bedienungsgerät nach dieser Erfindung,
Fig. 2 ein Pulssignal zur Uebertragung eines einzigen Zeichens,
Fig. 3 eine Pulsfolge, die die Kommunikation in beiden Richtungen zwischen der Maschine und dem Gerät darstellt

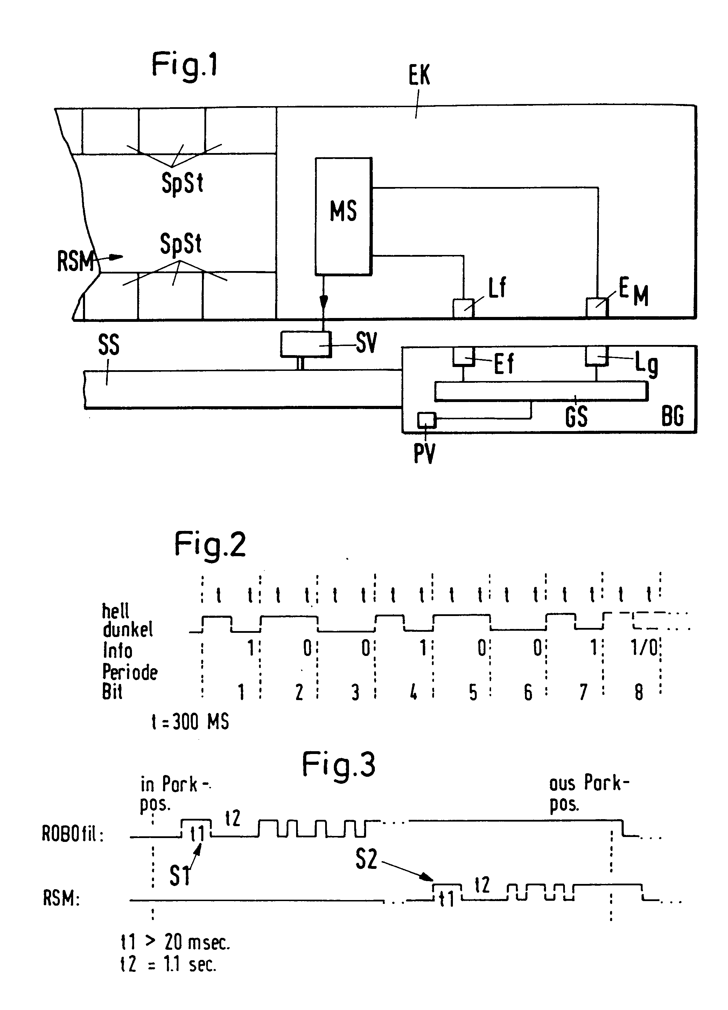

Fig. 1 zeigt eine schematische Aufsicht einer Ringspinnmaschine RSM, eines Bediengerätes BG und eine Stromschiene SS für das Bediengerät, das in Längsrichtung der Maschine der Stromschiene entlang fahren kann. Für die Einzelheiten des Systems wird auf EP 394 671 verwiesen und der Inhalt der EP 394 671 wird in dieser Beschreibung durch diesen Hinweis integriert, so dass sich die Wiederholung solcher Einzelheiten erübrigt.

Die Maschine RSM umfasst einen Endkopf EK mit einer Maschinensteuerung MS. Die Fahrschiene(n) (nicht gezeigt) des Gerätes BG erstrecken sich auch an diesem Endkopf, so dass das Gerät aus dem Bereich der Spinnstellen SpSt in eine Parkstelle am Endkopf EK fahren kann, wo Kommunikationsmittel des Gerätes und der Maschine sich gegenüberstehen. Dieses Kommunikationsmittel wird nachfolgend näher beschrieben. Die Kommunikationsmittel der Maschine sind zur Signalweitergabe mit der Maschinensteuerung MS und die Kommunikationsmittel des Gerätes sind zur Signalweitergabe mit der Gerätesteuerung GS verbunden.

Die Stromschiene SS wird mit Strom von einer Stromversorgung SV beliefert. Die Versorgung SV kann auch von der Maschinensteuerung MS gesteuert (insbesondere ein- bzw. angeschaltet) werden.

Nach EP 394 671 ist das Bediengerät GB auch mit einer Vorrichtung versehen, die zur Erkennung der Parkstelle geeignet ist, wobei die EP 394 671 in dieser Beziehung auch auf EP 388 937 ("Positioniereinrichtung") verweist. Das Gerät BG in Fig. 1 ist auf jeden Fall mit einer solchen Vorrichtung PV ausgerüstet, die auch mit der Gerätesteuerung GS in Verbindung steht.

Ein Gerät nach der EP 394 671 ist von der Anmelderin unter dem Namen "ROBOfil" angeboten und das weiterentwickelte Gerät BG nach Fig. 1 wird nachfolgend auch mit diesem Namen genannt.

### Arbeitsweise des Gerätes "ROBOfil"

Die Arbeitsweise ist in EP 394 671 beschrieben und wird hier nicht in Einzelheiten wiederholt. Wichtig ist, dass das Gerät periodisch an die Parkstelle zurückfährt bzw. zurückfahren sollte. Jedesmal, wenn das Gerät an der Parkstelle steht, kann eine Kommunikation nach dieser Erfindung erfolgen. Im Unterschied zu EP 295 406 ist aber eine Kommunikation zwischen dem Gerät und den Spinnstellen SpSt unmöglich, weil diese Spinnstellen ohne autonom-arbeitende Steuerungselektronik ausgeführt sind.

### Kommunikation zwischen Datenübertragungen.

Bei der Fahrt kann die Maschine durch Abschalten der Stromversorgung SV die Maschine dem ROBOfil ein Signal senden. Der ROBOfil bringt sich dann mit Hilfe seiner Notstrombatterie in einen definierten Zustand und schaltet sich ab.
- SV ein: --------------> Normalzustand
- SV aus: --------------> Stromausfall oder Notstopp

Das System kann derart ausgelegt werden, dass sich der ROBOfil bei einem Notstopp bzw. Rückruf wieder an die Parkstelle begibt.

### Datenübertragung Maschine - ROBOfil.

Kommunikationsmittel
Die Maschine RSM ist an der Parkstelle mit einem Lichtsender Lf versehen. Mit diesem Lichtsender kommuniziert die Maschinensteuerung mit dem ROBOfil, der mit einem Empfänger Ef ausgerüstet ist.

Wenn der ROBOfil in seine Parkstellung eingefahren ist, wird ein Lichtempfänger Em auf der Maschine durch einen Lichtsender Lg auf dem ROBOfil aktiviert, und der ROBOfil kommuniziert darüber mit der Maschinensteuerung.

Wegen der Arbeitsweise des Gesamtsystems soll die Dauer der Kommunikation möglichst kurz sein. Einfachheitshalber soll aber mit serieller Datenübertragung gearbeitet werden. Die Lösung besteht darin, die "übertragbaren" Botschaften von vornherein (z.B. gemäss einem "Uebertragungsprotokoll") festzulegen und derart zu verschlüsseln, dass die Uebertragung eines einzigen Zeichens eine ganze Botschaft oder zumindest einen wesentlichen Teil (mindestens 25%) einer Botschaft darstellt. Nach einem solchen Verfahren ist es möglich, relativ viele Informationen mittels einer kleineren Anzahl von Pulsfolgen zu übertragen. Dabei ist es von Vorteil, die Zeichen signaltechnisch nach einem Standardverfahren darzustellen.

### Uebertragungsprotokoll (Prinzip)

Es soll zumindest je ein Bitstrom mittels der beiden Lichtschranken (Sender-Empfänger-Paar) übertragen werden (nur wenige Befehle).

Von Vorteil ist ein selbsttaktendes Schreibverfahren, wie es bei der Aufzeichnung von Daten auf eine Disk verwendet wird. Das "2f-Verfahren" rsp. "Wechselschrittverfahren" ist für diese Anwendung bestens geeignet. Dieses Verfahren weist einen hohen Uebertragungssicherheitsgrad auf und wird deswegen häufig zur Lösung Uebertragungsaufgaben dieser Art angewendet.

Der Signalverlauf für die Uebertragung von Daten ist in Fig. 2 gezeigt. Der Bittakt 2t wird durch einen Signalwechsel (Ein --> Aus oder Aus --> Ein bzw. dunkel --> hell oder hell --> dunkel) am Anfang jeder Periode mitübertragen, weshalb das System als selbsttaktend bezeichnet wird. Erfolgt innerhalb einer Periode noch ein Signalwechsel (Frequenz-Verdoppelung auf 2f bzw. Schrittwechsel) so zählt das entsprechende Bit als "1", sonst als "0".

Die Anzahl der benötigten Bit-Perioden richtet sich nach der Anzahl unterscheidbarer Meldungen, die gesendet werden müssen, bzw. nach deren Codierung.

Es sind aber auch andere Uebertragungsverfahren anwendbar, wie sie z.B. bei seriellen Schnittstellen an PC's üblich sind.

Eine Meldung besteht vorzugsweise aus einem Zeichen aus dem ASCII-Zeichensatz das heisst, es werden jedesmal sieben Bit (ASCII-Zeichen) plus ein Kontrollbit (K) übertragen. Das Kontrollbit wird so gewählt, dass die Uebertragung immer in der gewünschten Polarität endet (RSM "low", ROBOfil "high"). Die Uebertragung von einem Zeichen ist schematisch in Fig. 2 gezeigt.

### Datenaustausch

Ein Kommunikationspaket wird vorzugsweise vom ROBOfil gestartet sobald dieser seine Parkposition erreicht hat. Zur Synchronisation schaltet dieser seinen Sendekanal für mindestens 40 msec auf "high" und anschliessend auf "low". Diese negative Flanke ermöglicht es dem Empfänger Em von einem langsamen Abfragetakt (1 sec) auf einen schnellen Abfragetakt (20 msec) umzuschalten.

Nach weiteren 1.1 sec startet die Datenübertragung. Der ROBOfil beendet seine Uebertragung mit "high". Anschliessend antwortet die RSM mit einer gleichen "high/low - Kombination" und sendet ihre Daten.

Der ROBOfil und die RSM gehen erst wieder auf "low", wenn der ROBOfil die Parkposition verlassen hat. Dies erlaubt eine Ueberwachung der Parkposition.

Die Datenübertragung findet vorzugsweise sofort nach der Ankunft des ROBOfil statt, da sonst Alarme nicht rechtzeitig erkannt werden.
- falls der ROBOfil gesperrt bleibt, sendet die RSM ein "D" oder "G",
- falls der ROBOfil sofort wieder die Freigabe erhält, oder wenn die Aussperrung beendet ist, wird eine Meldung übertragen, welche angibt, nach wievielen Minuten (die "Zykluszeit") der ROBOfil spätestens wieder an der Parkstelle sein muss.
- ist beim ROBOfil alles in Ordnung, sendet er immer ein "I".

Die Uebertragung von zwei Datenpaketen ist in Fig. 3 schematisch dargestellt.

### Uebertragung ROBOfil ---> RSM

| Meldung | ASCII - Zeichen |
|---|---|
| Zuviele Doff-Fadenbrüche | "D" --> Alarm |
| Zuviele Fadenbrüche | "F" --> Alarm |
| Zuviele Luntenstopps betätigt | "L" --> Alarm |
| ROBOfil i.O. | "I" |
| ROBOfil nicht i.O. (Alarm) | "N" --> Alarm |
| ROBOfil nicht i.O. (Fehler) | "S" --> Fehler |

Zuviele Doff-Fadenbrüche bedeutet, dass während der ersten Fahrt nach dem Doffen, mehr als die im ROBOfil als Grenzwert definierten Fadenbrüche gezählt wurden (wird von der Maschinensteuerung nur das erste Mal nach dem Doffen akzeptiert). Dieses Zeichen löst in der Maschine einen Alarm aus.

Zuviele Fadenbrüche heisst, dass während einer im ROBOfil definierten (vorprogrammierten) Anzahl ROBOfil-Zyklen, nie alle Fadenbrüche behoben werden konnten. Ein ROBOfil-Zyklus ist eine Fahrt aus der Parkposition bis in die Parkposition zurück.

Zuviele Luntenstopps betätigt sagt aus, dass mehr als die im ROBOfil als Grenzwert definierten Luntenstopps betätigt sind.

ROBOfil i.O. wird immer dann übertragen, wenn keine anderen Meldungen zur Uebertragung anstehen.

ROBOfil nicht i.O. (Alarm) bedeutet, dass dringende Wartungsarbeiten ausgeführt werden müssen. Der ROBOfil bleibt in der Parkposition stehen. Die Zeichen F, L und N lösen ebenfalls in der Maschine einen Alarm aus.

ROBOfil nicht i.O. (Fehler) heisst, dass der Bediener gelegentlich einen Fehler beheben muss. Der ROBOfil arbeitet normal weiter.

### Uebertragung RSM ---> ROBOfil

| Meldung | ASCII - Zeichen |
|---|---|
| Ausgesperrt wegen Doffen | "D" |
| Ausgesperrt aus anderen Gründen | "G" |
| Freigabe mit Zykluszeit (n Min.) | 5 <= n <= 30 |
| Uebertragung n = | a ... z |
| (n --> Kleinbuchstaben des ASCII-Staz) | |

Die "anderen Gründe", die mit "G" angegeben werden, umfassen z.B. Maschinenstopp, Maschine/Doffer im Service-Modus und ROBOfil im Handbetrieb.

Ein "Zeichen" nach Fig. 2 besteht aus acht "Perioden" gleicher vorbestimmter Dauer (z.B. 600 MS). Während einer Periode bleibt der Lichtsender in einem gegebenen Zustand (O) oder er ändert seinen Zustand (1), wobei am Anfang einer Periode auf jeden Fall eine Zustandsänderung stattfindet. Die "Zustände" in Fig. 2 sind mit "hell" und "dunkel" bezeichnet, was "high" bzw. "low" Zustände der Energielieferung an den Lichtsender entsprechen.

Nachdem die Positioniereinrichtung PV an die Gerätesteuerung GS gemeldet hat, dass sich ROBOfil an der Parkstelle befindet, wird ein Startsignal an die Ringspinnmaschine RSM ausgelöst. Dieses Signal ist in Fig. 3 mit S1 bezeichnet. Nach dem Abschluss der Sendung des ROBOfils sendet die Ringspinnmaschine RSM ebenfalls ein Startsignal S2 (Fig.3) an den ROBOfil, bevor sie mit der Uebertragung der Daten beginnt.

Wenn die Maschine RSM den ROBOfil eine Freigabe zum Weiterarbeiten erteilt (siehe EP 394 671) kann die Maschinensteuerung gleichzeitig eine Fahrzykluszeit von "n" Minuten bestimmen und an den ROBOfil übertragen.

Die bevorzugten Lichtsender/-Empfänger-Geräte sind Einweg-Lichtschranken, die eine Lichtschranke des Typs OLS222/120 der Firma Elesta ebenbürtig sind. Diese Lichtschranke besteht aus dem Lichtschranke OLS120 und dem Empfänger OLS222. Die Schranke ist für 24V-Betrieb geeignet und optisch für die benötigte Uebertragungsdistanz ausgelegt - im Fall ROBOfil beträgt diese Distanz 80 mm. Die Taktzeit t (Fig.2) sollte wesentlich grösser gewählt werden als die Reaktionszeit der Sender-/Empfänger-Kombination.

Die Fahrzykluszeit für verschiedene Maschinenzustände können in die Maschinensteuerung über eine Tastatur eingegeben werden und an den ROBOfil in Abhängigkeit vom momentanen Maschinenzustand weitergegeben werden. Es kann z.B. die nachfolgenden Maschinenzustände je mit einer eigenen Fahrzykluszeit definiert werden:

| Maschinenzustand | Bezeichnung | Wählbar zwischen |
|---|---|---|
| Erster Zyklus nach dem Doffen | n1 | 20 bis 30 Minuten |
| Normalfahrzyklus | nx | 10 bis 20 Minuten |
| Letzter Zyklus vor den Doffen | nd | > 5 Minuten |

## Patentansprüche

1. Ein Verfahren zur Uebertragung von Daten zwischen einem Bedienungsgerät und einer Textilmaschine, dadurch gekennzeichnet, dass
nachdem festgestellt wird, dass das Gerät und die Maschine in einer vorbestimmten Beziehung zueinander stehen, ein Startsignal für die Kommunikation entweder vom Gerät oder von der Maschine ausgelöst wird.

2. Ein Bedienungsgerät für eine Textilmaschine mit einer Steuerung und eine Vorrichtung zum Feststellen, dass das Gerät in einer vorbestimmten Beziehung zur Maschine steht, dadurch gekennzeichnet, dass
das Gerät mit Mitteln zum Senden eines Startsignals für die Datenübertragung versehen ist.

3. Eine Textilmaschinenanlage bestehend aus einer Textilmaschine und einem dieser Maschine zugeordneten fahrbaren Bedienungsgerät, mit Mitteln zum Feststellen, dass das Gerät in einer vorbestimmten Stelle gegenüber der Maschine positioniert ist, gekennzeichnet
durch Mittel zum Ausführen einer Datenübertragung im Anschluss an die Feststellung der genannten Positionierung.

4. Eine Anlage nach Anspruch 3, dadurch gekennzeichnet, dass Mittel zum Auslösen der Datenübertragung vorgesehen sind und über eine Steuerung mit Mitteln zum Feststellen der Positionierung verbunden sind.

5. Eine Anlage nach Anspruch 3 oder 4, dadurch gekennzeichnet, dass
die Maschine und das Gerät je mit je einer Steuerung versehen sind und die Datenübertragung die Uebertragung von Befehlen von der Maschinensteuerung an die Gerätesteuerung einschliesst.

6. Eine Anlage nach Anspruch 5, dadurch gekennzeichnet, dass ein Befehl, der gesendet werden kann, eine Zykluszeit umfasst, wonach das Gerät wieder an der genannten Stelle stehen sollte.

7. Eine Anlage nach einem der Ansprüche 3 bis 6, dadurch gekennzeichnet, dass
ein Zusatzmittel zur stetigen Kommunikation zwischen dem Gerät und der Maschine vorgesehen ist, wobei über dieses Mittel nur relativ einfache Befehle gesendet werden können.

8. Eine Anlage nach einem der Ansprüche 3 bis 7, dadurch gekennzeichnet, dass
die Datenübertragung berührungslos erfolgt.

9. Eine Anlage nach Anspruch 8 oder ein Gerät nach Anspruch 2, dadurch gekennzeichnet, dass
die Datenübertragung mittels Lichtsender/-empfänger erfolgt.

10. Eine Anlage nach einem der Ansprüche 3 bis 9, dadurch gekennzeichnet, dass
die Datenübertragung jeweils die Uebertragung von mindestens einem Charakter nach einem vorbestimmten Schema umfasst.
